# FASCICULE DE BREVET EUROPEEN

(11) **EP 2 688 784 B1**
(45) Date de publication et mention de la délivrance du brevet: **02.11.2016**
(21) Numéro de dépôt: 11709402.9
(22) Date de dépôt: 21.03.2011
(51) Int. Cl.: B62D 7/14

(54) **MÉCANISME DE DIRECTION**
LENKMECHANISMUS
STEERING MECHANISM

(43) Date de publication de la demande: 29.01.2014
(73) Titulaire: 4Power4 Sprl, 1040 Bruxelles (BE)
(72) Inventeur: PORCHERON, François, B-1040 Bruxelles (BE)
(74) Mandataire: Thibault, Jean-Marc
(86) Numéro de dépôt international: PCT/EP2011/054234
(87) Numéro de publication internationale: WO 2012/126510

(56) Documents cités:
- WO-A1-2008/141676
- DE-A1- 4 210 001
- DE-A1- 10 019 563
- FR-A1- 2 381 654
- FR-A1- 2 578 217
- US-A- 4 721 318
- US-A- 4 999 003
- US-A- 5 890 558
- US-A1- 2008 184 687

## Description

### Domaine technique

La présente invention concerne un mécanisme de direction pour orienter les roues directrices d'un véhicule par rapport au châssis. La présente invention concerne en particulier un mécanisme de direction destiné à des véhicules courts et pour lesquels un rayon de braquage réduit est demandé. La présente invention concerne aussi un fauteuil roulant pour handicapés muni d'un tel mécanisme de direction.

### Etat de la technique

Le mécanisme de direction le plus employé dans les véhicules à quatre roues est connu sous le nom de direction Ackermann. La direction Ackermann, qu'il n'est pas nécessaire de décrire plus en détail ici, permet aux quatre roues du véhicules de s'orienter sur les tangentes de cercles concentriques. Le rayon de braquage est déterminé par la distance entre le centre des cercles et les roues. Les roues tournent ainsi autour d'un même point, ce qui permet de préserver les pneus, de garantir une adhérence optimale et de réduire le bruit.

La géométrie du dispositif Ackermann n'est cependant pas parfaite et les centres de rotation des quatre roues ne sont pas parfaitement superposés. Par ailleurs, le rayon de braquage dépend de la longueur du véhicule et notamment de la distance entre l'essieu avant et l'essieu arrière. Si des véhicules très longs, par exemple des autocars, peuvent effectuer des virages serrés, il n'en va pas de même des véhicules courts.

De nombreux véhicules courts, notamment des fauteuils roulants pour handicapés ou des véhicules utilitaires tels que petits tracteurs, exigent cependant une grande manoeuvrabilité et un rayon de braquage réduit afin de modifier l'orientation du véhicule pratiquement sur place, sans usure excessive des pneumatiques et avec un minimum de bruit.

US4852679 décrit une direction à rayon de braquage réduit pour chaise roulante électrique. Le mécanisme emploie des câbles pour relier les quatre roues au centre du véhicule. L'ensemble est fragile et les différents câbles exigent un espace important sous le véhicule. Ce volume ne peut pas être utilisé pour les batteries par exemple.

DE4236786 décrit une direction pour chaise roulante électrique, permettant un rayon de braquage très petit grâce à un système de cames. Le calcul et l'usinage des cames est complexe, et l'usure des pièces mobiles dans les cames rapide.

Un autre mécanisme de direction basé sur des cames est décrit dans US5862874.

WO08141676 décrit un mécanisme de direction comportant des biellettes et des axes de déplacement linéaires, qui est particulièrement bien adapté à des véhicules courts et des chaises d'handicapé par exemple. Les biellettes qui coulissent le long de coulisse rectilignes liées au châssis s'avèrent cependant fragiles et sensibles au sable ou aux projections de terre.

D'autres fauteuils roulants sont dirigés en accélérant les roues externes dans les virages, sans les orienter correctement. Ces mécanismes sont simples à réaliser mécaniquement, mais l'électronique de commande des moteurs est plus complexe. Par ailleurs, les pneus mal orientés font un bruit important dans les virages et tendent à s'user rapidement en laissant des marques.

### Bref résumé de l'invention

Un but de la présente invention est donc de proposer un mécanisme de direction amélioré par rapport aux mécanismes de l'art antérieur, et en particulier un dispositif adapté aux véhicules courts qui ne présente pas les défauts mentionnés ci-dessus.

Selon l'invention, ces buts sont obtenus au moyen d'un mécanisme de direction selon la revendication indépendante, des variantes de réalisation préférentielles étant indiqués dans les revendications dépendantes.

En particulier, ces buts sont obtenus au moyen d'un mécanisme de direction selon la revendication 1.

Ce mécanisme de direction présente l'avantage de comporter moins de pièces que la plupart des mécanismes de direction de l'art antérieur. Il est donc moins cher à produire et plus robuste.

Ce mécanisme de direction présente en outre l'avantage de n'utiliser que des pièces en rotation, à l'exception de l'actuateur linéaire dont les translations sont immédiatement converties en rotation par le palonnier. Les mouvements de rotation nécessitent des pièces moins fragiles que les mouvements de translation qui nécessitent des coulisses ou des paliers davantage susceptibles de se bloquer.

Ce mécanisme de direction permet d'obtenir de manière très simple une rotation des quatre roues du véhicule, avec des angles de rotation différents ou même opposés selon le rayon de courbure du véhicule.

D'autres avantages apparaîtront à la lecture de la description illustrée par les figures annexées.

### Brève description des figures

Des exemples de mise en oeuvre de l'invention sont indiqués dans la description illustrée par les figures annexées dans lesquelles :

La figure 1 illustre une vue en perspective d'un châssis de véhicule, par exemple une chaise motorisée pour handicapé, munie d'un mécanisme de direction selon un mode de réalisation de l'invention.

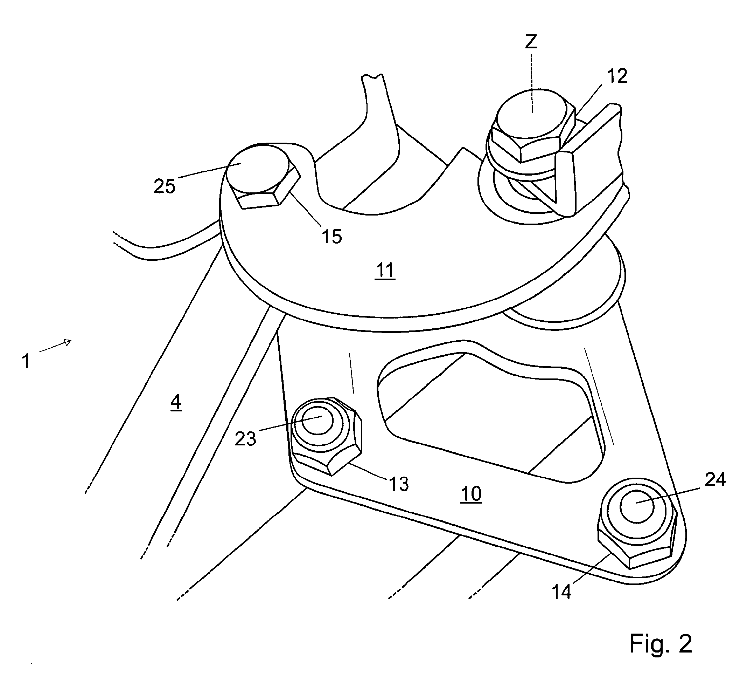

La figure 2 illustre une vue en perspective d'un palonnier selon l'invention.

### Exemple(s) de mode de réalisation de l'invention

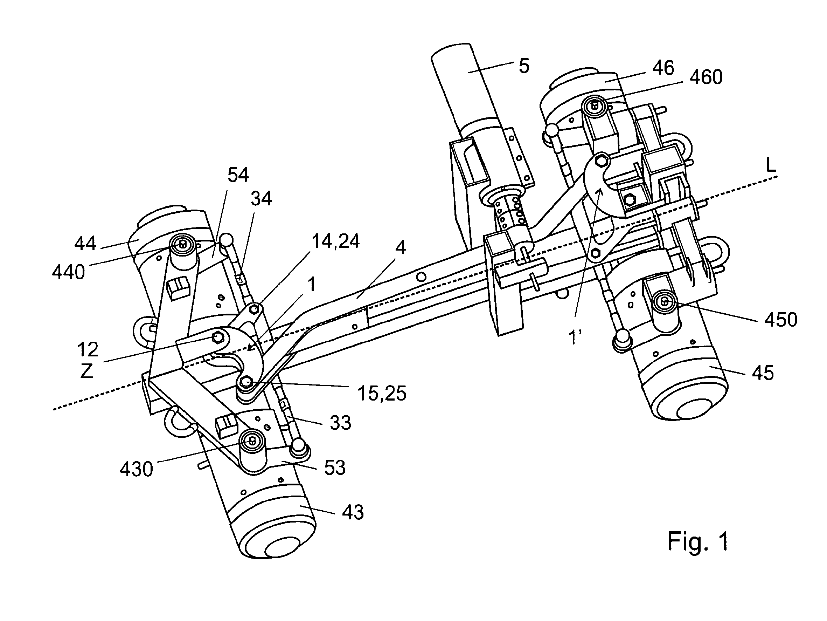

La figure 1 illustre une vue en perspective du châssis d'un véhicule court, par exemple une chaise roulante motorisée, munie d'un mécanisme de direction selon l'invention. Le mécanisme décrit est cependant applicable à d'autres types de véhicules, notamment à tout type de véhicules courts nécessitant un rayon de braquage réduit, y compris des véhicules à deux ou à quatre roues directrices et à deux ou à quatre roues motrices. Un exemple de véhicule auquel ce mécanisme de direction pourrait être appliqué est décrit dans WO08141676, qui divulgue le préambule de la revendication 1.

Un des buts de ce mécanisme de direction est de permettre à deux ou quatre roues du véhicule de tourner simultanément, selon des angles de rotation différents à l'intérieur et à l'extérieur du virage, afin de permettre au véhicule de négocier des virages serrés. Les rotations du mécanisme de direction sont obtenues en actionnant électroniquement un servomoteur 5 dont les rotations provoquent un déplacement linéaire de l'actuateur linéaire 4, de manière à faire ensuite tourner simultanément les quatre roues 43 à 46. La position angulaire du servomoteur 5, et donc l'angle de rotation des roues, est commandée en appliquant la tension désirée à l'entrée de commande du servomoteur, par exemple au moyen d'un potentiomètre non représenté. Avantageusement, les roues reprennent la même position lorsque la tension d'entrée appliquée au servomoteur 5 est la même. Par exemple, les roues reviennent en position droite lorsque la tension d'entrée appliquée au servomoteur est nulle.

Les quatre roues sont motrices et entraînées chacune par un moteur électrique indépendant. Les moteurs sont alimentés électriquement au moyen de batteries situées avantageusement de part et d'autre de l'actuateur linéaire 4. Une électronique de commande non représentée permet de commander indépendamment la vitesse des quatre roues 43 à 46 en fonction des consignes introduites à l'aide d'un joystick par exemple. Il de façon indépendante, de manière à ce que les roues à l'extérieur d'un virage tournent plus vite que celles à l'intérieur. Comme on le voit en particulier sur la figure 1, les moteurs électriques sont montés sur l'axe de rotation des roues et tournent donc avec la roue dans les virages. Cela permet d'éviter des liaisons articulées entre l'axe des moteurs et celui des roues. Dans une variante préférentielle, la commande électronique des moteurs permet d'impartir une vitesse des roues externes supérieure à la vitesse des roues internes dans les virages.

Dans une variante, les roues sont entraînées au moyen d'un seul moteur central. Il est bien entendu aussi possible d'entraîner uniquement les roues avant ou uniquement les roues arrières.

Les roues 43 à 46 peuvent tourner par rapport au châssis, constitué notamment des traverses transversales 3 et de la traverse longitudinale 4, autour de premiers axes verticaux 430, 440, 450, 460 respectivement, de manière à modifier la direction du véhicule. Les mouvements des quatre roues sont liés mécaniquement entre eux, en sorte que la rotation d'une roue entraîne nécessairement la modification de l'orientation des trois autres roues. Les roues sont uniquement parallèles entre elles lorsqu'elles sont droites ; dès qu'elles tournent, les roues internes pivotent davantage que les roues externes, et les roues avant en sens opposé aux roues arrières. Le mécanisme de direction avec les deux palonniers 1, 1' de l'invention permet de contrôler ces rotations.

A l'arrière du véhicule, par exemple, le palonnier 1 comporte une première liaison 12 agencée pour permettre au palonnier de pivoter autour d'un axe de rotation vertical z par rapport au châssis, dès que l'utilisateur veut tourner. Une deuxième liaison 13 est agencée pour coopérer via un deuxième pivot 23 avec un premier membre 33 collaborant avec une première roue 43 du véhiculepour la faire pivoter autour de l'axe 430.Le premier membre 33 est dans cet exemple constitué par une barre longitudinale qui est connectée de manière pivotante à un premier élément 53, par exemple une barre ou une plaque, solidaire de la première roue 43.

De façon symétrique par rapport à l'axe longitudinal L du véhicule, une troisième liaison 14 est agencée pour coopérer via un troisième pivot 24 avec un deuxième membre 34 collaborant avec une deuxième roue 44du véhiculepour la faire pivoter autour de l'axe 440.Le deuxième membre 34 est par exemple constitué par une barre longitudinale qui est connectée de manière pivotante à un deuxième élément 54, par exemple une barre ou une plaque, solidaire de la deuxième roue 44.

La deuxième liaison 13 et la troisième liaison 14 sont disposées sur une première partie 10 palonnier. Cette première partie est ici constituée par une plaque évidée pour l'alléger et rendre les rotations de la colonne de direction plus faciles et plus rapides.

Le palonnier comporte une deuxième partie 11 constituée par une autre plaque dans un plan différent de la première plaque 10. Cet arrangement permet notamment à l'actuateur linéaire 4 de pivoter au-dessus de la première plaque 10 sans la toucher, et aux deux membres 33 et 34 de pivoter par rapport au palonnier sans toucher nit la deuxième plaque ni l'actuateur linéaire 4. Autrement dit, l'arrangement des liaisons dans deux plans permet d'éviter les collisions entre l'actuateur linéaire 4 et les deux membres 33, 34 lors des rotations. Dans l'exemple illustré, la deuxième partie 11 est en forme de « C » ou de « C » inversé, afin de réduire son poids.

La deuxième plaque 11 est liée à la première plaque 10 au travers d'une pièce intermédiaire 16, dans cette exemple un tube cylindrique creux. La première liaison 12 entre le palonnier et le châssis traverse cette pièce intermédiaire. Les deux liaisons 13 et 14 sont disposées symétriquement autour de la première liaison, de part et d'autre de l'axe longitudinal L,

La deuxième plaque comporte une quatrième liaison 15 agencée pour coopérer via un quatrième pivot 25 avec un actuateur linéaire 4 connecté de façon pivotante par rapport au palonnier. L'actuateur linéaire suit approximativement l'axe longitudinal L au centre du véhicule, et est constitué par un tube rectiligne dont les deux extrémités sont repliées dans des directions opposées.

La quatrième liaison 15 est décalée par rapport audit axe centrale lorsque les roues sont droites, en sorte que le déplacement longitudinal de l'actuateur linéaire 4 qui est connecté de manière pivotante aupalonnier 1 produit une rotation de ce dernier autour de la première liaison 12 et de l'axe de rotation z. Cette rotation est transmise via les composants 33, 53 respectivement 34 54 aux roues 43, respectivement 44.

L'actuateur linéaire 4 peut être commandé pour se déplacer linéairement le long de l'axe longitudinal L au moyen d'un servomoteur 5 monté dans un plan horizontal, perpendiculairement à l'axe L. Les rotations contrôlées du servomoteur 5 sont transformées en translations de l'actuateur linéaire 4 au moyen d'une bielle ou d'une came non représentée. La position angulaire du servomoteur 5 est contrôlée au moyen d'une tension de contrôle appliquée au servomoteur, cette tension de contrôle permettant ainsi de contrôler l'orientation des quatre roues du véhicule. Dans un mode de réalisation avantageux, la tension de contrôle déterminant la position angulaire du servomoteur 5, et donc celle de chaque roue, est déterminée à l'aide d'un potentiomètre actionné par l'utilisateur du véhicule.

Le servomoteur retourne ainsi à sa position d'origine lorsque le potentiomètre délivre une tension prédéfinie, par exemple à 0V.

Comme on le voit sur la figure 1, le véhicule comporte un second palonnier 1' à l'extrémité longitudinale opposée du véhicule, afin de contrôler les deux autres roues 45 et 46 et de les faire pivoter en sens plafonnier sont identiques ou simplement symétriques aux éléments correspondants liés au premier plafonnier, et leur description ne sera donc pas répétée ici. Les deux palonniers à l'avant et à l'arrière du véhicule sont donc dans une disposition miroir, en sorte que l'actuation de l'actuateur linéaire pour produire une rotation du premier palonnier dans le sens horaire produit une rotation du deuxième palonnier dans le sens antihoraire, et vice-versa.

### Numéros de référence employés sur les figures

- 1: Palonnier
- 1': Second palonnier
- 10: Première partie du palonnier
- 11: Seconde partie du palonnier
- 4: Actuateur linéaire
- 5: Servomoteur
- 12: Première liaison
- 13: Deuxième liaison
- 14: Troisième liaison
- 15: Quatrième liaison
- 16: Pièce intermédiaire
- 23: Deuxième pivot
- 24: Troisième pivot
- 25: Quatrième pivot
- 33: Premier membre
- 34: Deuxième membre
- 43: Première roue
- 44: Deuxième roue
- 45: Troisième roue
- 46: Quatrième roue
- 53: Premier élément
- 54: Deuxième élément
- Z: Axe de rotation
- L: Axe longitudinal

## Revendications

1. UN MÉCANISME DE DIRECTION POUR ORIENTER LES ROUES DIRECTRICES D'UN VÉHICULE COMPORTANT UN PREMIER PALONNIER (1) ACTIONNÉ PAR UN ACTIONNEUR LINÉRAIRE (4), LEDIT PALONNIER COMPORTANT :
UNE PREMIÈRE LIAISON (12) LIÉE AU CHÂSSIS DUDIT MÉCANISME DE DIRECTION AFIN DE PERMETTRE AUDIT PALONNIER DE PIVOTER PAR RAPPORT AUDIT CHÂSSIS AUTOUR D'UN AXE DE ROTATION (Z) LORSQUE LEDIT ACTUATEUR LINÉAIRE (4) EST ACTIONNÉ ;
UNE DEUXIÈME LIAISON (13) AGENCÉE POUR POUVOIR COOPÉRER VIA UN DEUXIÈME PIVOT (23) AVEC UN PREMIER MEMBRE (33) COLLABORANT AVEC UNE PREMIÈRE ROUE (43) LIÉE AU MÉCANISME DE DIRECTION ;
UNE TROISIÈME LIAISON (14) AGENCÉE POUR POUVOIR COOPÉRER VIA UN TROISIÈME PIVOT (24) AVEC UN DEUXIÈME MEMBRE (34) COLLABORANT AVEC UNE DEUXIÈME ROUE (44) LIÉE AU MÉCANISME DE DIRECTION ;
DANS LEQUEL LA DEUXIÈME LIAISON ET LA TROISIÈME LIAISON SONT DISPOSÉES SYMÉTRIQUEMENT PAR RAPPORT À L'AXE LONGITUDINAL(L) DU CHÂSSIS ;
UNE QUATRIÈME LIAISON (15) AGENCÉE POUR POUVOIR COOPÉRER VIA UN QUATRIÈME PIVOT (25) AVEC L'ACTUATEUR LINÉAIRE (4), LA QUATRIÈME LIAISON ÉTANT DÉCALÉE PAR RAPPORT AUDIT AXE CENTRALE LORSQUE LES DITES ROUES SONT DROITES, EN SORTE QUE L'ACTUATION DUDIT ACTUATEUR LINÉAIRE (4) CONNECTÉ DE MANIÈRE PIVOTANTE AUDIT PALONNIER (1) PRODUIT UNE ROTATION DU PALONNIER AUTOUR DE LADITE PREMIÈRE LIAISON (12) ET DUDIT AXE DE ROTATION (Z), ET UNE ROTATION DESDITES PREMIÈRE ET DEUXIÈME ROUES (43, 44) AU TRAVERS DES PREMIER ET DEUXIÈME MEMBRES ;
**CARACTÉRISÉ EN CE QUE** LEDIT PALONNIER COMPORTE :
UNE PREMIÈRE PARTIE (10) QUI COMPORTE LES DEUXIÈME (13) ET TROISIÈME (14) LIAISONS ;
UNE DEUXIÈME PARTIE (11) QUI COMPORTE LES PREMIÈRE (12) ET QUATRIÈME (15) LIAISONS ;
LA PREMIÈRE PARTIE ET LA DEUXIÈME PARTIE ÉTANT DANS DEUX PLANS DIFFÉRENTS.

2. LE MÉCANISME DE DIRECTION DE LA REVENDICATION 1, DANS LEQUEL LE PREMIER MEMBRE (33) EST CONNECTÉ DE MANIÈRE PIVOTANTE À UN PREMIER ÉLÉMENT (53) COOPÉRANT AVEC LA PREMIÈRE ROUE (43) POUR LA FAIRE PIVOTER, ET DANS LEQUEL LE DEUXIÈME MEMBRE (34) EST CONNECTÉ DE MANIÈRE PIVOTANTE À UN DEUXIÈME ÉLÉMENT (54) COOPÉRANT AVEC LA DEUXIÈME ROUE (44) POUR LA FAIRE PIVOTER LORSQUE LE PALONNIER PIVOTE AUTOUR DUDIT AXE DE ROTATION (Z).

3. LE MÉCANISME DE DIRECTION DE L'UNE DES REVENDICATIONS 1 OU 2, DANS LEQUEL LA DEUXIÈME PARTIE EST LIÉE À LA PREMIÈRE PARTIE PAR L'INTERMÉDIAIRE D'UNE PIÈCE INTERMÉDIAIRE, LADITE PREMIÈRE LIAISON (12) TRAVERSANT LADITE PIÈCE INTERMÉDIAIRE.

4. LE MÉCANISME DE DIRECTION DE L'UNE DES REVENDICATIONS 1 À 3, DANS LEQUEL LADITE PREMIÈRE PARTIE EST ÉVIDÉE AFIN DE RÉDUIRE SON POIDS.

5. LE MÉCANISME DE DIRECTION DE L'UNE DES REVENDICATIONS 1 À 4, DANS LEQUEL LADITE DEUXIÈME PARTIE A UNE FORME DE « C ».

6. LE MÉCANISME DE DIRECTION DE L'UNE DES REVENDICATIONS 1 À 5, COMPORTANT UN SERVOMOTEUR ROTATIF (5) COOPÉRANT AVEC LEDIT ACTUATEUR LINÉAIRE POUR PROVOQUER UN DÉPLACEMENT AXIAL DUDIT ACTUATEUR LINÉAIRE AFIN DE PRODUIRE UNE ROTATION DU PALONNIER (1).

7. LE MÉCANISME DE DIRECTION DE L'UNE DES REVENDICATIONS 1 À 6, COMPORTANT UN POTENTIOMÈTRE POUR COMMANDER LEDIT SERVOMOTEUR ROTATIF.

8. LE MÉCANISME DE DIRECTION DE LA REVENDICATION 7, DANS LEQUEL LEDIT SERVOMOTEUR RETOURNE À SA POSITION D'ORIGINE LORSQUE LE POTENTIOMÈTRE DÉLIVRE UNE TENSION PRÉDÉFINIE.

9. LE MÉCANISME DE DIRECTION DE L'UNE DES REVENDICATIONS 1 À 6, COMPORTANT UN SECOND PALONNIER (1') CONNECTÉ À LA SECONDE EXTRÉMITÉ DE L'ACTUATEUR LINÉAIRE (4) AFIN DE PROVOQUER LA ROTATION D'UNE TROISIÈME ET D'UNE QUATRIÈME ROUE LORSQUE LEDIT ACTUATEUR LINÉAIRE (4) EST ACTIONNÉ.

10. LE MÉCANISME DE DIRECTION DE LA REVENDICATION 9, DANS LEQUEL LEDIT SECOND PALONNIER (1') EST ARRANGÉ DANS UNE DISPOSITION EN MIROIR DUDIT PREMIER PALONNIER (1) EN SORTE QUE L'ACTUATION DE L'ACTUATEUR LINÉAIRE POUR PRODUIRE UNE ROTATION DU PREMIER PALONNIER DANS LE SENS HORAIRE PRODUIT UNE ROTATION DU DEUXIÈME PALONNIER DANS LE SENS ANTIHORAIRE, ET VICE-VERSA.

## Patentansprüche

1. Lenkmechanismus zum Ausrichten der Lenkräder eines Fahrzeugs, umfassend einen ersten Steuerhebel (1), der durch einen Linearaktor (4) betätigt wird, wobei der Steuerhebel umfasst:
eine erste Verbindung (12), die mit dem Rahmen des Lenkmechanismus verbunden ist, um dem Steuerhebel zu ermöglichen, gegenüber dem Rahmen um eine Rotationsachse (Z) zu verschwenken, wenn der Linearaktor (4) betätigt wird,
eine zweite Verbindung (13), die dazu eingerichtet ist, über eine zweite Drehachse (23) mit einem ersten Glied (33), welches mit einem mit dem Lenkmechanismus verbundenen ersten Rad (43) zusammenwirkt, zusammenwirken zu können,
eine dritte Verbindung (14), die dazu eingerichtet ist, über eine dritte Drehachse (24) mit einem zweiten Glied (34), welches mit einem mit dem Lenkmechanismus verbundenen zweiten Rad (44) zusammenwirkt, zusammenwirken zu können,
wobei die zweite Verbindung und die dritte Verbindung in Bezug auf die Längsachse (L) des Rahmens symmetrisch angeordnet sind,
eine vierte Verbindung (15), die dazu eingerichtet ist, über eine vierte Drehachse (25) mit dem Linearaktor (4) zusammenwirken zu können, wobei die vierte Verbindung gegenüber der Mittelachse versetzt ist, wenn die Räder gerade sind, so dass die Betätigung des Linearaktors (4), der mit dem Steuerhebel (1) schwenkbar verbunden ist, eine Drehung des Steuerhebels um die erste Verbindung (12) und die Rotationsachse (Z) sowie eine Drehung des ersten und des zweiten Rades (43, 44) durch das erste und das zweite Glied erzeugt,
**dadurch gekennzeichnet, dass** der Steuerhebel umfasst:
einen ersten Teil (10), der die zweite (13) und die dritte (14) Verbindung umfasst,
einen zweiten Teil (11), der die erste (12) und die vierte (15) Verbindung umfasst,
wobei der erste Teil und der zweite Teil sich in zwei unterschiedlichen Ebenen befinden.

2. Lenkmechanismus von Anspruch 1, bei dem das erste Glied (33) mit einem ersten Element (53), das mit dem ersten Rad (43) zusammenwirkt, schwenkbar verbunden ist, um es zu drehen, und wobei das zweite Glied (34) mit einem zweiten Element (54), das mit dem zweiten Rad (44) zusammenwirkt, schwenkbar verbunden ist, um es zu drehen, wenn der Steuerhebel um die Rotationsachse (Z) verschwenkt.

3. Lenkmechanismus von einem der Ansprüche 1 oder 2, bei dem der zweite Teil mit dem ersten Teil mittels eines Zwischenstücks verbunden ist, wobei die erste Verbindung (12) das Zwischenstück durchquert.

4. Lenkmechanismus von einem der Ansprüche 1 bis 3, bei dem der erste Teil ausgespart ist, um sein Gewicht zu reduzieren.

5. Lenkmechanismus von einem der Ansprüche 1 bis 4, bei dem der zweite Teil eine C-Form aufweist.

6. Lenkmechanismus von einem der Ansprüche 1 bis 5, umfassend einen rotierenden Servomotor (5), der mit dem Linearaktor zusammenwirkt, um eine Axialbewegung des Linearaktors zu bewirken, um eine Drehung des Steuerhebels (1) zu erzeugen.

7. Lenkmechanismus von einem der Ansprüche 1 bis 6, umfassend ein Potentiometer zur Steuerung des rotierenden Servomotors.

8. Lenkmechanismus von Anspruch 7, bei dem der Servomotor in seine Ausgangsposition zurückkehrt, wenn das Potentiometer eine vordefinierte Spannung liefert.

9. Lenkmechanismus von einem der Ansprüche 1 bis 6, umfassend einen zweiten Steuerhebel (1'), der mit dem zweiten Ende des Linearaktors (4) verbunden ist, um die Drehung eines dritten und eines vierten Rades zu bewirken, wenn der Linearaktor (4) betätigt wird.

10. Lenkmechanismus von Anspruch 9, bei dem der zweite Steuerhebel (1') in einer Spiegelanordnung des ersten Steuerhebels (1) angeordnet ist, so dass die Betätigung des Linearaktors zum Erzeugen einer Drehung des ersten Steuerhebels im Uhrzeigersinn eine Drehung des zweiten Steuerhebels gegen den Uhrzeigersinn erzeugt und umgekehrt.

## Claims

1. Steering mechanism for directing the steered wheels of a vehicle having a first swing bar (1) actuated by a linear actuator (4), said swing bar comprising:
- a first link (12) connected to the chassis of said steering mechanism in order to enable said swing bar to pivot about an axis of rotation (Z) in relation to said chassis when said linear actuator is actuated ;
- a second link (13) designed to be able to collaborate via a second pivot (23) with a first member (33) collaborating with a first wheel (43) connected to the steering mechanism ;
- a third link (14) designed to be able to collaborate via a third pivot (24) with a second member (34) collaborating with a second wheel (44) connected to the steering mechanism ;
- wherein the second link and the third link are positioned symmetrically in relation to the longitudinal axis (L) of the chassis ;
- a fourth link (15) designed to be able to collaborate via a fourth pivot (25) with the linear actuator (4), wherein the four the link is offset from said central axis when the wheels are straight so that actuation of the linear actuator (4) connected in a pivoting manner to said swing bar (1) causes the swing bar to rotate around said first link (12) and said axis of rotation (z), and causes a rotation of said first and second wheels (43, 44) via the first and second members ;
**characterized in that** said swing bar comprises :
- a first part (10) that comprises the second (13) and third (14) links ;
- a second part (11) that comprises the first (12) and the fourth (15) links ;
- the first part and the second part being in two different planes.

2. The steering mechanism of claim 1, wherein the first member (33) is connected in pivoting fashion to a first element (53) collaborating with the first wheel (43) to make it pivot, and wherein the second member (34) is connected in pivoting fashion to a second element (54) collaborating with the second wheel (44) to make it pivot when the swing bar pivots about said axis of rotation (z).

3. The steering mechanism of one of the claims 1 or 2, wherein the second part is connected to the first part by means of an intermediary part, wherein said first link (12) goes through said intermediary part.

4. The steering mechanism of one of the claims 1 to 3, wherein said first part is hollowed out in order to reduce its weight.

5. The steering mechanism of one of the claims 1 to 4, wherein said second part has the shape of a "c".

6. The steering mechanism of one of the claims 1 to 5, comprising a rotating servomotor (5) collaborating with said linear actuator to cause an axial displacement of said linear actuator in order to produce a rotation of the swing bar (1).

7. The steering mechanism of one of the claims 1 to 6, comprising a potentiometer to control said rotating servomotor.

8. The steering mechanism of claim 7, wherein said servomotor returns to its initial position when the potentiometer supplies a predefined voltage.

9. The steering mechanism of one of the claims 1 to 6, comprising a second swing bar (l') connected to the second end of the linear actuator (4) so as to cause a third and a fourth wheel to rotate when said linear actuator (4) is actuated.

10. The steering mechanism of claim 9, wherein said second swing bar (l') is arranged in a mirror layout to said first swing bar (1) so that actuating the linear actuator to cause the first swing to rotate in clockwise direction causes the second swing bar to rotate anticlockwise and vice-versa.
